# EUROPEAN PATENT APPLICATION

(11) **EP 1 024 677 A2**
(43) Date of publication of application: **02.08.2000**
(21) Application number: 00850015.9
(22) Date of filing: 25.01.2000
(51) Int. Cl.: H04Q 11/04

(54) **Method and apparatus for distributing messages in a communication network**

(30) Priority: 26.01.1999 SE 9900234
(71) Applicant: Net Insight AB, 126 14 Stockholm (SE)
(72) Inventor: Danielsson, Magnus, 182 74 Stocksund (SE); Holmlund, Mattias, 113 36 Stockholm (SE)
(74) Representative: Ellner, Lars O.

(57) **Abstract**

The present invention relates to a method and an apparatus for distributing information in a communication network, a subject node of the network comprising two or more interfaces, each thereof being defined by a respective input port and a respective output port of said node, each port being provided to connect to a unidirectional connection.

According to the invention, input messages are received at input ports of the subject node, and for each input message being of a kind for which a subject distribution mechanism shall apply and being associated with a network path defined by an output port of the subject node, information pertaining to the input message is transmitted via the output port that forms part of the same interface as said input port, thereby to reach another node connected to the same unidirectional link as the subject node, and via said output port defining said network path, thereby to acknowledge the reception of said input message to the sender thereof.

## Description

### Technical Field of Invention

The present invention refers to a method and an apparatus for distributing information in a communication network, a subject node of the network comprising two or more interfaces, each thereof being defined by a respective input port and a respective output port of said node, each port being provided to connect to a unidirectional connection.

### Background of the Invention

A communication network is a data processing system that includes a plurality of interconnected components, or nodes, such as work stations, phones, data storage devices, printers, servers, switches, routers, hubs, etc. The nodes are typically interconnected via unidirectional or bidirectional connections, for example in the form of copper wires or optical fibers, and communicate by transmitting and receiving information to and from other nodes on the connections.

When, in such a communication network, the nodes of the network may be connected to optionally form shared, multi-access links such as busses, dual busses, rings, dual rings, and the like, which is the general case in, e.g., a DTM (Dynamic synchronous Transfer Mode) network, it is, for certain message types, desirable to distribute certain kind of information to all nodes situated on the same shared link as the sender of the information, but not necessarily or automatically to nodes not situated on the same link as the sender.

When for example distributing network topology information in such a network, it may be preferred that a detailed information pertaining to which nodes that are situated on a link is distributed or forwarded to all nodes situated on that link, but not necessarily to other nodes on other links, at least not in the same detailed form.

If the nodes of the network are completely aware of the configuration of the network, at least locally, and specifically of the link that it is sitting on, such limited distribution of a message may be performed by explicit addressing of the message. A problem with such a solution is however that such complete knowledge of the network configuration may not be available. Furthermore, the use of explicit addressing may require undesirable processing.

Another way of distributing such messages would be to simply broadcast the message on all directions, and then to limit message forwarding using a hop-count mechanism or the like. A problem with such a solution is that messages may be forwarded either further than desired, reaching nodes that are not supposed to receive the message and consequently overloading the network with more messaging than necessary, or shorter than desired, thus not reaching nodes that are supposed to receive the message.

In addition, it is often preferred that the message distribution scheme also incorporate some kind of acknowledgement mechanism, so that a sending node may have a way of telling that all the intended receivers situated on the link actually received the information. This task may be fairly manageable if some kind of explicit or destination based routing is used, but may generate a lot of unnecessary messaging if message broadcasting is used.

### Objects of the Invention

An object of the invention is to provide a simple and efficient scheme for distributing messages to all nodes situated on the same link, but essentially not to nodes not situated thereon.

More specifically, it is an object of the invention to provide a scheme for distributing network topology information to nodes of the network, specifically in a network that uses a distributed network topology discovery algorithm wherein the topology of the network must be discovered by the nodes themselves and is not necessarily known by the nodes at network startup.

### Summary of the Invention

The above mentioned and other objects of the invention are achieved by a method and an apparatus according to the accompanying claims.

According to the invention, input messages are received at input ports of a subject node. For each input message being of a kind for which a subject distribution mechanism shall apply, then being associated with a network path defined by an output port of the subject node, information pertaining to the input message is transmitted via the output port that forms part of the same interface as said input port, thereby to reach another node connected to the same unidirectional link as the subject node, and via said output port defining said network path, thereby to acknowledge the reception of said input message to the sender thereof.

Using the invention to determine when and how to perform information forwarding will advantageously guarantee that such information is distributed to all nodes situated on the same link and that acknowledgement of the reception of such information is transmitted/forwarded to reach the sender of the received message, while at the same time limiting message distribution to the link only.

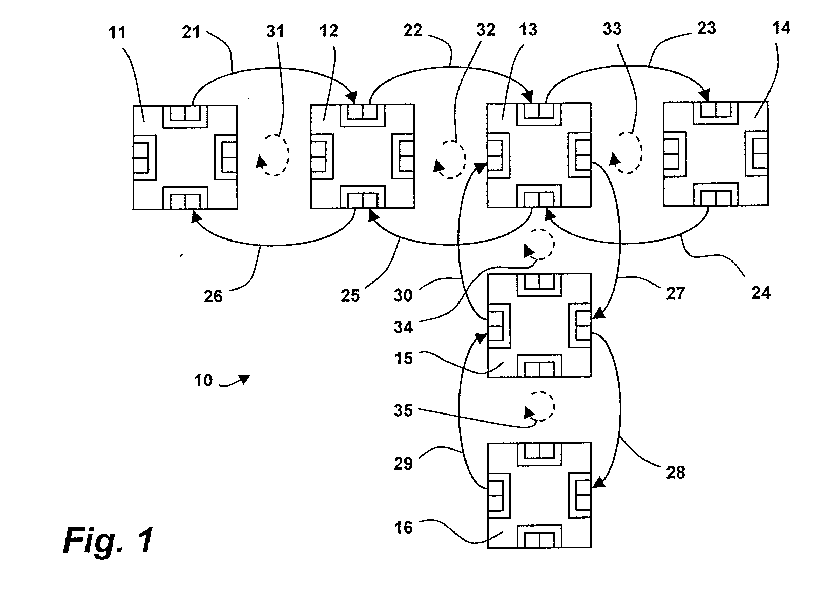

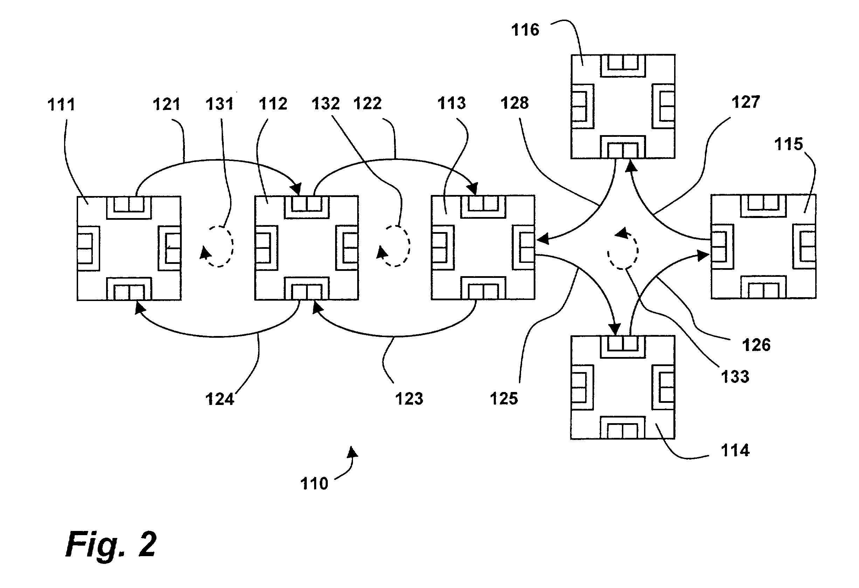

The invention is based upon in part on the idea of regarding the network as being built up of plurality of small network loops. For example, as will be described more in detail below with reference to Fig. 1 and 2, a dual bus link comprising N nodes may be regarded as an array of N-1 consecutive network loops, whereas a single ring link will be formed by one single network loop as such. For definition, if nodes A and B form part of the same network loop (optionally including other nodes as well), the loop may be said to comprise a network path from an output port of node A to an input port of node B and another network path from an output port of node B to an input port of node A, said paths together forming the closed network loop.

Each node forming part of such a network loop will have one input port and one output port associated therewith. For some loops, the input port and the output port that is associated with the loop will belong to different interfaces, as is the case when the loop forms part of a dual bus link, as illustrated in Fig. 1. In other loops, the input port and the output port that is associated with the loop will belong to the same interface, as is the case when the loop actually forms a single ring link, as illustrated in Fig. 2. Whether part of a ring link or bus link, if a message, or at least information identifying the message, is forwarded from the output port that forms part of the same network loop as the input port at which the message was received at a subject node, it will finally reach the sender that originated the message, and may thus be used to acknowledge reception of the message at the subject node.

Moreover, in dual bus, ring, and other link topologies, when information is forwarded along the same network loop, it will always stay within the same link. However, it is only in a ring link that it will reach all the nodes of the link. On a double bus link, the message will also have to be sent on other loops to reach all nodes of the link. Forwarding a message on another loop however involves the risk of sending the message on a loop that does not belong to the same link. As realized by the inventors, in a double bus link, each two consecutive loops will enter and leave, respectively, the intermediate node via the same interface. If a message is forwarded from one loop to another from an input port to an output port that are situated on the same interface, the message will be forwarded on a loop that is guaranteed to form part of the same link and not on a loop that forms part of another link. In fact, more generally, if a message received at an input port is forwarded from the output port that forms part of the same interface as the input port, the message will be forwarded on the same link, irrespective of the link being a ring, bus or point-to-point link.

Consequently, using the invention to determine when and how to perform information forwarding will advantageously guarantee that information may be distributed to all nodes situated on the same link and that acknowledgement of the reception of such information may be transmitted/forwarded to reach the sender of the received message, while at the same time limiting message distribution to the link only, as information is not automatically forwarded on any other ports of the subject node.

In a preferred embodiment, the information transmitted to reach another node connected to the same unidirectional link as the subject node will be information pertaining to the actual content of the input message, for example pertaining to updated topology information distributed by the input message, whereas the information transmitted to acknowledge reception of said input message need only identify that the input message has been received at the subject node. In other words, the information transmitted via the output port that defines said network path to acknowledge reception of said input message to the sender thereof may for example be a forwarded version of the received message as such, or a specific acknowledgement message, as long as the sender of the input message is able to use said information as verification of reception of the input message.

Similarly, the information transmitted to reach another node on the same link, i.e. transmitted via the same interface as the input message was received at, may for example be a forwarded version of the received message as such, thereby forwarding the information provided by the input message, a message including an updated version of the information provided by the input message, or simply a message including other information but being triggered by the reception of the input message.

To be noted, if the output port that forms part of the same interface as the input port at which the input message was received and the output port defining said network path are in fact the same output port, which for example will be the case of the topology consist of a single ring link only, the information to reach another node connected to the same unidirectional link and the information to acknowledge the reception of said input message to the sender thereof will be transmitted via the same output port. In such a case, such information may in fact be transmitted using one single message or using two messages, depending on the selected implementation.

If for example one message format is used for the acknowledging information, and another message format is used for the information to be provided to another node on the same link, two messages will typically be sent from the node irrespective of them being sent on the same or two separate output ports. However, in for example an embodiment wherein the input message as such is forwarded both to provide the information to the next node on the same link (i.e. via the same interface as it was received) and also via the output port defining the network path to be used for acknowledging the input message, an implementation wherein only one message is transmitted if these output ports are the same can be used.

The fact that an interface according to the invention is said to comprise an input port and an output port does not mean that the interface must be an actual separate physical interface or interface circuit board. Similarly, the conclusion that an input port and an output port are not part of the same interface according to the invention, does for example not mean that the two ports must reside on two different physical interface circuit boards.

The term "interface", as used herein, is to be understood as a combination of an input port and an output port that have been configured, physically or logically, to operate in a special relationship, not shared by any other port, that is independent of how the node is connected to the network and permanent if not physically or logically reconfigured.

For example, in a DTM network, this relationship will result in that frames of a bitstream received at the input port of an interface will, with the exemption of specific time slots or sets of time slots thereof which are "switched" to/from specific time slot positions of the frame, be transmitted essentially unmodified on the output port of the interface to reach downstream nodes, given that the bitstream shall not be terminated at the node, as is the case if the input port is the terminating end of a bus or if the interface is connected to form one end of a point-to-point link.

Similarly, two connections connected to the same interface is generally considered herein to form part of the same link, such as a bidirectional point-to-point link, a unidirectional bus link, or a unidirectional ring link.

Note that use of the invention does not mean that all messages are to be forwarded accordingly. Typically, only messages identified as being of the message type for which the subject distribution mechanism shall apply will be handled according to the invention, whereas other message types will be handled according to other messaging schemes.

According to a preferred embodiment of the invention, said forwarding/transmitting information via the output port that forms part of the same interface as the input port at which said input message was received is performed when it has been determined that said output port forms part of a valid network connection. Typically, the transmitted information will include information identifying the network loop that is associated with said output port, for example information identifying the network path (the output port) from the recipient of the transmitted message back to the subject node. This will advantageously enable the receiving node to determine from which output port an acknowledgement is to be sent.

Preferably, if the output port that is part of the same interface as the input port at which the input message was received has not yet been determined to form a valid network connection, then typically not having been found forming part of a valid network loop, the content of the input message is typically stored for later forwarding when such a valid connection has been determined.

According to another embodiment of the invention, transmission of information via the output port that forms part of the same interface as the input port at which said input message was received includes monitoring that an acknowledgment of reception of said information is subsequently received at an input port of the subject node. If such an acknowledgement is not received, the information will be re-transmitted via said output port.

Furthermore, in order to avoid further unnecessary propagation of messages within a link or loop, the node will preferably only transmit information as a result of having received an input a message if it determines that the node itself was not the origin of the input message, or that the information provided by the input message is already known by the node.

The invention is preferably used as a mechanism for forwarding messages that provide network topology information. For example, it may in some networks be preferred that a message identifying one or more nodes that form part of a link is distributed to all nodes that form said link but not automatically or necessarily to nodes that do not form part of said link. This is an example of a situation in which the invention will be advantageous.

To be noted, the way in which it the nodes have determined which network path, i.e. which output port, that may be used for transmitting messages from the receiver of the input message to the sender thereof is not discussed in detail herein, but have for example been discussed in the International Patent Application SE99/02169 filed by the same applicant, the description thereof hereby being incorporated by reference.

Although applicable in many types of networks, the invention is especially advantageous, for reasons discussed above, in networks wherein the nodes of the network are connected to form shared, multi-access links allowing the existence of several kind of link types, such as ring, bus, as well as point-to-point links, such as in a DTM (Dynamic synchronous Transfer Mode) network. More information on DTM networks are found in, for example, "The DTM Gigabit Network", Christer Bohm, Per Lindgren, Lars Ramfelt, and Peter Sjodin, Journal of High Speed Networks, 3(2):109-126, 1994, and "Multi-gigabit networking based on DTM", Lars Gauffin, Lars Håkansson, and Björn Pehrson, Computer networks and ISDN Systems, 24(2):119-139, April 1992.

The above mentioned and other aspects, features and details of the invention will be more fully understood from the following description of a preferred embodiment thereof.

### Brief Description of the Drawings

An exemplifying preferred embodiment of the invention will now be described in detail with reference to the accompanying drawings, wherein:
Figs. 1 and 2 schematically show respective networks operating according to an embodiment of the invention;
Fig. 3 schematically shows a switch node of the kind included in the networks of Figs. 1 and 2;
Figs. 4 and 6 schematically show routines performed by the node in Fig. 3 according to embodiments of the invention; and
Figs. 5a and 5b schematically shows respective message forwarding action performed according to the routine of Fig. 4.

### Detailed Description of a Preferred Embodiment

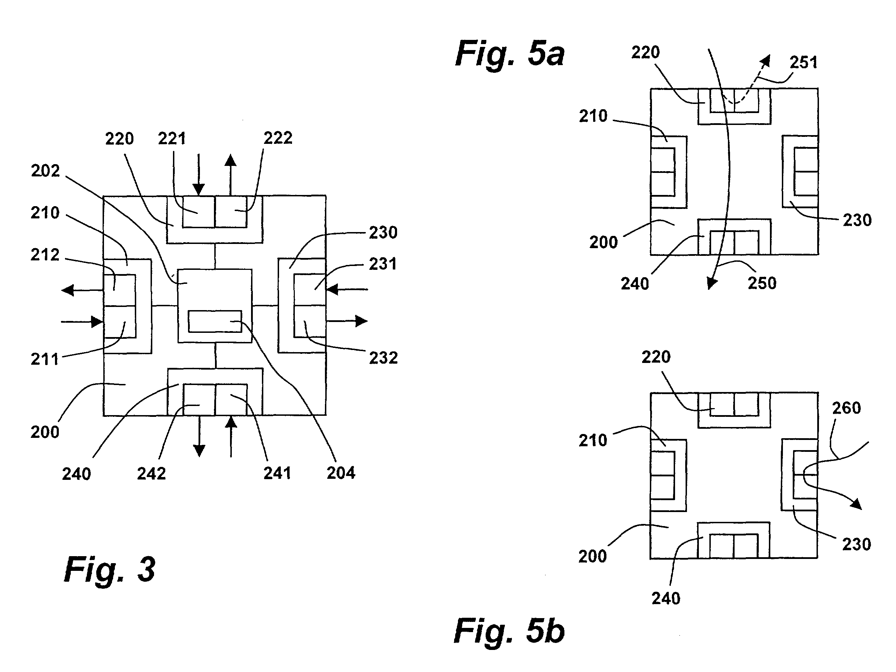

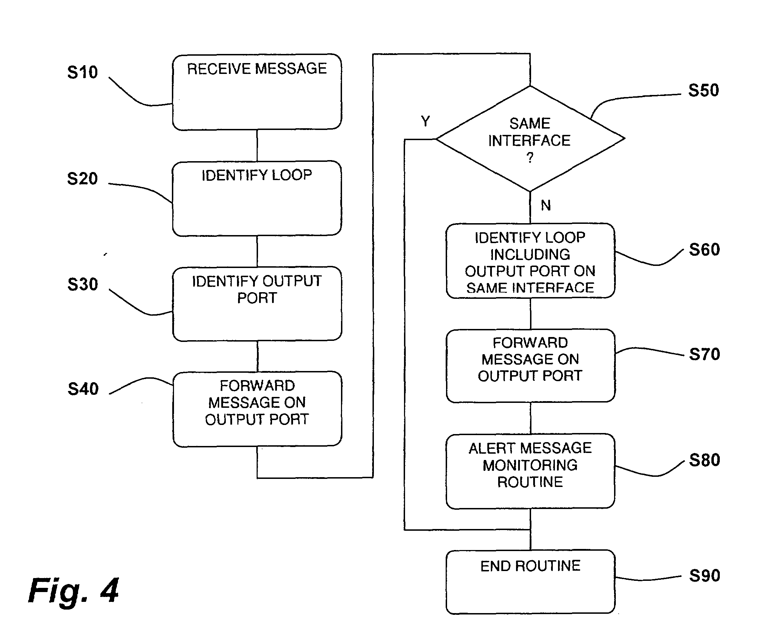

In Fig. 1, a network 10 is shown comprising six nodes 11-16, interconnected via unidirectional (as indicated by the arrows) connections 21-30. Each node is shown having four interfaces, each comprising one input port and one output port, as will be described more in detail below with reference to Fig. 3.

In Fig. 1, connections 21-23 may be viewed as together forming a first unidirectional bus interconnecting nodes 11-14, node 11 acting as head end of the bus and node 14 acting as terminating end thereof. Furthermore, connections 24-26 may be viewed as together forming a second unidirectional bus also interconnecting nodes 11-14, node 14 in this case acting as the head end and node 11 acting as terminating end thereof. Together, the busses formed by connections 21-26 may be viewed as forming a first dual bus link comprising nodes 11-14. Similarly, connections 27 and 28 together with connections 29 and 30 may be viewed as forming a second dual bus link comprising nodes 13, 15, and 16. The network 10 may thus be viewed as comprising two dual bus links interconnected at node 13.

In Fig. 1, it is also noted that node 11, connection 21 from node 11 to node 12, node 12, and connection 26 from node 12 to node 11 together form a network loop 31, as indicated by a semi-circular, dotted arrow. Likewise, node 12, connection 22 from node 12 to node 13, node 13, and connection 25 from node 13 to node 12 together form another network loop 32. The first dual bus link may thus be viewed as being built up by three consecutive network loops 31-33. Likewise, the second dual bus link may be regarded as being built up by two consecutive network loops 34 and 35.

In Fig. 2, another network 110 is shown comprising six nodes 111-116, similar to the ones described above with reference to Fig. 1, interconnected via unidirectional (as indicated by the arrows) connections 121-128. In similar to the network described above with reference to Fig. 1, connections 121-124 in Fig. 2 may be viewed as together forming a dual bus link comprising nodes 111-113. Moreover, connections 125-128 may be viewed as together forming a single loop link interconnecting nodes 113-116. Also, in similar to what has been describe above with reference to Fig. 1, it is noted that the dual bus link in Fig. 2 may also be viewed as being built up by two consecutive network loops 131 and 132, and that the single loop link is formed by only one single network loop 133.

Turning now to Fig. 3, a node 200, which could be any one of the nodes shown in Figs. 1 and 2, is shown comprising four interfaces 210, 220, 230, and 240, wherein interface 210 comprises one input port 211 and one output port 212, interface 220 comprises one input port 221 and one output port 222, interface 230 comprises one input port 231 and one output port 232, and interface 240 comprises one input port 241 and one output port 242. Furthermore, the node 200 comprises a core 202, which is connected to all four interfaces and which provides the desired switching of data between the interfaces, as well as a node controller 204 for controlling the operation of the node 200, including controlling message distribution processes performed by the node.

To be noted, if the node 200 is situated as, for example, node 13 in Fig. 1, it will form part of, among others, the loop 32. More specifically, input port 221, which is assumed to be the input port that is connected to node 12 via connection 22 (forming a network path from node 12 to node 13), and output port 242, which is assumed to be the output port that is connected to node 12 via connection 25 (forming a network path from node 13 to node 12), will form loop 32. Similarly, if the node 200 is situated as, for example, node 113 in Fig. 1, it will form part of, among others, the single ring loop 133. More specifically, input port 231, which is assumed to be the input port that is connected to node 116 via connection 128, and output port 232, which is assumed to be the output port that is connected to node 114 via connection 125, will form part of the loop 133. It is important to note that, in the former case (node 13), the input port and the output port that form part of the same loop are situated on two separate interfaces, whereas they in the latter case (node 113) are situated on the same interface. However, irrespective of which, a link (bus or ring) will always enter and leave a node via the same interface.

As discussed above, for, e.g., topology information messages it is preferred that the information provided therein is distributed to all nodes that are situated on the same link but not necessarily to nodes situated on other links, and that reception of such a message is acknowledged to the sender thereof. For example, in Fig. 1, it may be preferred that such a message, or at least the information provided therein, generated by node 11 is distributed to each one of the nodes 12-14 that are situated on the same link as node 11 but not necessarily to nodes 15 and 16 that are not part of this link. Similarly, in Fig. 2, it may be preferred for such information, when generated by e.g. node 111, to be transmitted to nodes 112 and 113, which are situated on the same double bus link as node 111, but not necessarily to nodes 114-116, which are not situated on the dual bus link. Correspondingly, information of such a type generated by node 116 shall be transmitted to nodes 113-115, which are situated on the same single ring link as node 116, but not necessarily to nodes 111 and 112, which are not situated on the single ring link.

A routine for forwarding such information according to an embodiment of the invention will now be described with reference to Fig. 4, using the networks described with reference to Fig. 1 and 2 and the node described with reference to Fig. 3 as surrounding environment to further illustrate the routine. The routine of Fig. 4 will typically be performed by a software module residing in the node controller 204 of Fig. 3.

More specifically, it is now assumed that the routine in Fig. 4 is performed by node 200 in Fig. 3 while being situated as node 13 in Fig. 1, and that node 12 has transmitted a message to input port 221 of node 13 via link 22, said message including, apart from the actual message content (which is assumed to be topology information), a type field identifying that the message is of the relevant message type and a loop field identifying that the message is transmitted on loop 32.

First of all, node 13 will determine whether or not the received message is of a type to be handled by the routine. Only if so is the case will the routine in Fig. 4 be executed. One instance of the routine will be initiated for each received message of the relevant type.

Consequently, as the received message is of the relevant type, the routine in Fig. 4 will be alerted in step S10 that a message has been received at input port 221. In step S20, based upon the loop field of the message, the routine will identify which loop that the message is transmitted on, in this case loop 32. Based thereupon, the routine will, in step S30, identify, e.g. based upon previously acquired network topology knowledge, which output port that forms part of the loop identified in the loop field and thus provides a network path back to the sender of the message. In this case, as discussed above, it will determine that output port 242 connected via connection 25 to node 12 is the output port that forms part of the loop 32. Having determined so, the routine will, in step S40, forward the message via the identified output port 242, thereby making it possible for the sender of the input message (node 12) to determine that the message was received by node 13. This forwarding of the message from the input port to the output port of the same loop is schematically illustrated by arrow 250 in Fig 5a. The routine then continues to step S50.

In step S50, the routine will determine whether or not the input port at which the message was received and the output port at which the message was transmitted, i.e. the input port and the output port forming part of the identified loop, belong to the same interface. If so, the node will now that the transmitted message has been transmitted along the same link to reach another node on the link, and the routine continues to step S90 and the routine is ended. However, if not, which is the case with the above mentioned input port 221 and output port 242 forming part of loop 32 but belonging to different interfaces, the routine will continue to step S60.

In step S60, the routine will determine which output port that belongs to the same interface as the input port at which the message was received, i.e. in this case output port 222. It will then determine whether or not that output port is part of a network loop. The routine will thus in this case determine that output port 222 is part of loop 33. The routine will then continue to step S70, wherein the information provided by the input message is forwarded via the so identified output port 222. As a message is now transmitted on a new loop, the loop field of the message will be used to identify this new loop, i.e. loop 33. This forwarding of the message from the input port to the output port of the same interface is schematically illustrated by arrow 251 in Fig 5a.

Also, as the routine has now initiated forwarding of the message on a new loop, it will continue to step S80 to alert a message monitoring routine (not shown). The message monitoring routine will make sure that the message is forwarded through the entire loop by monitoring that an acknowledgement of the message (in this case in the form of a forwarded version of the message as such) is subsequently received, within a given time frame, at an input port of the node. If the message is not received within the given time frame, the message monitoring routine will re-transmit the message on output port 222 and will continue doing so until the message is received as expected.

To be noted, if no loop has yet been determined to exist, in step S60, for the output port 222 belonging to the same interface as input port 221, the routine will wait until such a loop is determined to exist, thus temporarily storing said message, and will continue to step S70 as soon as such a loop has been determined.

Finally, having alerted the message monitoring routine in step S80, the routine is ended in step S90.

To conclude, the information will thus be forwarded along the first dual bus link, and will be acknowledged along the network loop to reach the sender of the information, without having the information automatically being forwarded along the second dual bus link in Fig. 1.

It is now assumed that the routine in Fig. 4 is performed by node 200 in Fig. 3 while being situated as node 113 in Fig. 2, and that node 116 has transmitted a message to input port 231 of node 113 via link 128, said message including, apart from the actual message content, a type field identifying that the message is of the relevant message type and a loop field identifying that the message is transmitted on loop 133.

First of all, node 113 will determine whether or not the received message is of a type to be handled by the routine. As this is the case, the routine in Fig. 4 will be alerted in step S10 that a message has been received at input port 231. In step S20, based upon the loop field of the message, the routine will identify which loop the message is transmitted on, i.e. loop 133. Based thereupon, the routine will, in step S30, determine that output port 232 that is connected via connection 125 to node 114 is the output port that forms part of the loop 133. Having determined so, the routine will, in step S40 forward the information provided in the received message via the so identified output port 232, thereby forwarding the information along the relevant loop. This forwarding of the message from the input port to the output port of the same loop is schematically illustrated by the arrow 260 in Fig 5b. The routine then continues to step S50.

In step S50, the routine will determine whether or not the input port at which the information was received and the output port at which the information was transmitted, i.e. the input port and the output port forming part of the identified loop, belong to the same interface, the already transmitted message then serving both acknowledging and information forwarding purposes. As this is the case with input port 231 and output port 232, the routine continues to step S90 where it is ended.

Thus, in the described situation, no additional message forwarding along a new loop will be performed. As preferred, the message will thus be forwarded along the single loop link without automatically being forwarded along the dual bus link in Fig. 2.

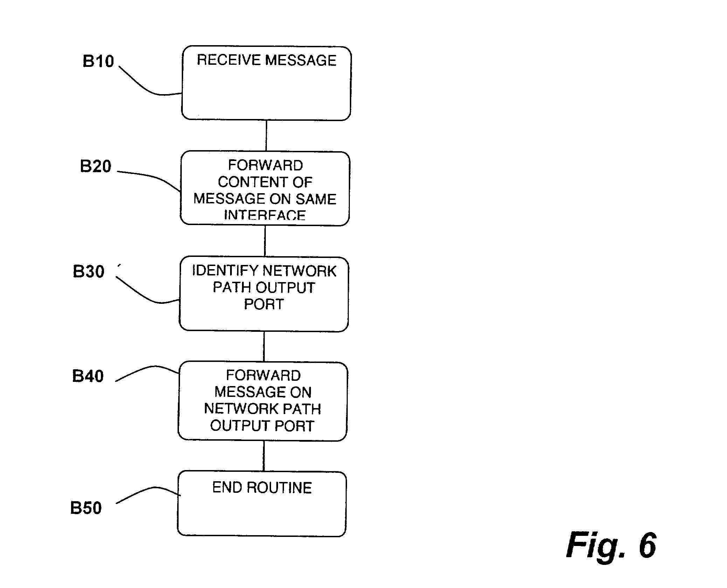

Another routine for forwarding such information according to an embodiment of the invention will now be described with reference to Fig. 6, using the networks described with reference to Figs. 1 and 2 and the node described with reference to Fig. 3 as surrounding environment to further illustrate the routine.

First of all, the node will determine whether or not the received message is of a type to be handled by the routine. Only if so is the case will the routine in Fig. 6 be executed. One instance of the routine will be initiated for each received message of the relevant type.

Consequently, as the received message is of the relevant type, the routine in Fig. 6 will be alerted in step B10 that a message has been received at e.g. input port 221. In step B20, the routine will forward the topology information provided in the input message, or an updated version thereof, on the output port (in this case port 222) of the same interface as the input message was received, including in said message data identifying the return network path to be used by the receiving node to acknowledge the forwarded information. Thus, if the node was situated as node 13 in Fig. 1 and the input message was received on connection 22 from node 12, the information will be forwarded on connection 23 to reach node 14. Similarly, if the node was situated as node 113 in Fig. 2, and the input message was received on connection 128 from node 116, the information will be forwarded on connection 125 to reach node 114.

As a next step, at B30, the node will identify which network path (or loop) that is associated with the input message, and which output port that defines that network path, and will then, step B40, transmit an acknowledgement via the so identified output port. Thus, if the node was situated as node 13 in Fig. 1 and the input message was received on connection 22 from node 12 and was associated with the loop/path 32, the node will identify output port 242 as forming part of that loop, and will thus transmit an acknowledgement via output port 242 on connection 25 to reach node 12. Similarly, if the node was situated as node 113 in Fig. 2 and the input message was received on connection 128 from node 126 and was associated with the loop/path 133, the node will identify output port 232 as forming part of that loop, and will thus transmit an acknowledgement via output port 232 on connection 125 to reach node 114.

As understood by those skilled in the art, the above mentioned steps may be altered, modified, and/or integrated. Furthermore, steps may be added or excluded based upon the desired functionality within the scope of the invention, which is defined by the accompanying claims.

Also, even though the invention has been primarily discussed in relation to double bus and single ring links, it may just as well be used in any other kind of topology. Also, whereas the detailed description above shows nodes all having four interfaces, the invention is of course not limited thereto.

The fact that the decisions performed according to the invention takes place in relation to the existence of at least two interfaces, does not mean that all nodes of the network need to have at least two interfaces. For example, a node may have only one interface and still be part of an information-forwarding scenario according to the invention.

Furthermore, as is understood by those skilled in the art, the term forwarding, as used herein, does not mean that the transmitted message or information need to be identical to the received one. The degree by which the content and format of the transmitted message correspond to the content and format of the received message is preferably selected depending on the desired operation of the actual network in which the invention is implemented and/or upon which specific message forwarding behavior that is desired.

Hence, the decision regarding how to actually realize and implement the invention will typically depend upon how the explicit network type will be positively or negatively affected by aspects such as the amount of messages transmitted within the network, message size, the amount of message processing, the changing and/or maintaining of states at each node, and so on.

## Claims

1. A method for distributing information in a communication network, a subject node of the network comprising two or more interfaces, each thereof being defined by a respective input port and a respective output port of said node, each port being provided to connect to a unidirectional connection, said method comprising
receiving input messages at input ports of the subject node and, for each input message being of a kind for which a subject distribution mechanism shall apply, then being associated with a network path defined by an output port of the subject node, performing the step of
transmitting information pertaining to the input message via the output port that forms part of the same interface as said input port, thereby to reach another node connected to the same unidirectional link as the subject node, and via said output port defining said network path, thereby to acknowledge the reception of said input message to the sender thereof.

2. A method as claimed in claim 1, wherein the information transmitted via the output port that forms part of the same interface as the input port at which said input message was received includes information pertaining to the content of the input message.

3. A method as claimed in claim 1 or 2, wherein said information transmitted via the output port that forms part of the same interface as the input port at which said input message was received and the information transmitted via the output port defining said network path is transmitted as two separate messages if said output ports are in fact the same output port.

4. A method as claimed in claim 1 or 2, wherein said information transmitted via the output port that forms part of the same interface as the input port at which said input message was received and the information transmitted via the output port defining said network path is transmitted as one single message if said output ports are in fact the same output port.

5. A method as claimed in any one of the preceding claims, wherein said step of transmitting information via the output port that forms part of the same interface as said input port comprises, if said output port has not yet been determined to form part of a valid network connection, storing data provided by said input message and transmitting information relating thereto via said output port when it is subsequently determined that said output port forms part of a valid network connection.

6. A method as claimed in any one of the preceding claims, wherein said information transmitted via the output port that forms part of the same interface as the input port at which said input message was received includes information identifying a network path that is associated with said output port.

7. A method as claimed in any one of the preceding claims, wherein said step of transmitting information via the output port that forms part of the same interface as the input port at which said input message was received at the subject node comprises monitoring that an acknowledgement of the reception of said information at another node is subsequently received at an input port of the subject node and, if such an acknowledgement is not received as expected, re-transmitting said information via said output port.

8. A method as claimed in any one of the preceding claims, wherein said step of transmitting said information via the output port that forms part of the same interface at which said input message was received is performed only if it is determined that the information provided by said input message has not been previously received at said node.

9. A method as claimed in any one of the preceding claims, wherein information provided by said input message and transmitted, as such or in an updated form, from the output port that forms part of the same interface as the input port at which said input message was received refers to network topology information.

10. A method as claimed in any one of the preceding claims, used for distributing topology information along a multi-access unidirectional link in a DTM network.

11. A method as claimed in any one of the preceding claims, wherein said network path provides a transmission path back to the sender of said input message, thereby forming, together with the network path from the sender of the input message to the input port at which said input message was received at the subject node, a closed network loop.

12. An apparatus capable of distributing messages in a communication network, said apparatus comprising:
two or more interfaces, each thereof being defined by a respective input port and a respective output port, each port being provided to connect to a unidirectional connection; and
message processing means for processing messages transmitted and received via said ports, wherein said means, when an input message of a kind for which a subject distribution mechanism shall apply has been received at an input port, said message being associated with a network path defined by an output port of the apparatus, are arranged to transmit information pertaining to the input message via the output port that forms part of the same interface as said input port, thereby to reach another node connected to the same unidirectional link as the apparatus, and via said output port defining said network path, thereby to acknowledge the reception of said input message to the sender thereof

13. An apparatus as claimed in claim 12, said means being arranged to include, in said information transmitted via the output port that forms part of the same interface as the input port at which said input message was received, information pertaining to the content of the input message.

14. An apparatus as claimed in claim 12 or 13, said means being arranged to transmit said information to be transmitted via the output port that forms part of the same interface as the input port at which said input message was received and said information to be transmitted via the output port defining said network as two separate messages if said output ports are in fact the same output port.

15. An apparatus as claimed in claim 12 or 13, said means being arranged to transmit said information to be transmitted via the output port that forms part of the same interface as the input port at which said input message was received and said information to be transmitted via the output port defining said network as one single message if said output ports are in fact the same output port.

16. An apparatus as claimed in claim 12, 13, 14, or 15, further comprising storing means for storing information provided in said input message, said message processing means being arranged to, if the output port that forms part of the same interface as the input port at which said input message was received has not yet been determined to form part of a valid network connection when said input message is received, transmit information provided by said input message, as stored in said storing means, via said output port when it is subsequently determined that said output port forms part of a valid network connection.

17. An apparatus as claimed in any one of claims 12-16, said message processing means being arranged to include, in said information to be transmitted via the output port that forms part of the same interface as the input port at which said input message was received, information identifying a network path that is associated with said output port.

18. An apparatus as claimed in any one of claims 12-17, said message processing means including means for monitoring that an acknowledgement of the reception of said information transmitted via the output port that forms part of the same interface as the input port at which said input message was received is subsequently received at an input port of the apparatus, said message processing means being arranged to re-transmit said information via said output port if such an acknowledgement is not received as expected.

19. An apparatus as claimed in any one of claims 12-18, said message processing means being arranged to determine whether or not information provided by said input message has been previously received at said apparatus and to transmit said information via the output port that forms part of the same interface as the input port at which said input message was received only if it is determined that the information provided by said input message has not been previously received at said apparatus.

20. An apparatus as claimed in any one of claims 12-19, wherein messages handled by said message processing means includes information pertaining to network topology information.

21. An apparatus as claimed in any one of claims 12-20, said message processing means being provided to distribute topology information along a multi-access unidirectional link in a DTM network.

22. An apparatus as claimed in any one of claims 12-21, wherein said network path provides a transmission path back to the sender of said input message, thereby forming, together with the network path from the sender of the input message to the input port at which said input message was received at the apparatus, a closed network loop.
